# EUROPEAN PATENT APPLICATION

(11) **EP 2 312 282 A1**
(43) Date of publication of application: **20.04.2011**
(21) Application number: 10173007.5
(22) Date of filing: 17.08.2010
(51) Int. Cl.: G01F 23/36

(54) **Wiper assembly for fuel level indication**

(30) Priority: 19.08.2009 US 543715
(71) Applicant: Delphi Technologies, Inc., Troy, MI 48007 (US)
(72) Inventor: Porras, Luis M., 32545 Cd. Juarez (MX); Mchale, Michael Joseph, El Paso, TX 79912 (US); Trejo, Arturo, 32500 Cd. Juarez (MX); Chavez, Cesar C., Cd. Juarez (MX)
(74) Representative: Denton, Michael John

(57) **Abstract**

A fuel level sensor includes a wiper support (18) with metal wiper contacts (20). A rotatable shaft (24) holds the wiper support (18) and a seal assembly is provided in which the wiper support (18) is disposed. The seal assembly includes a frame (26) and a cover (28) that are sealed together along respective peripheries with the wiper support (18) being sandwiched therebetween. The shaft (24) extends into and through an opening (34) formed in the cover (28) and is rotatable therein with a holder (38) cover (28)ing an end of the shaft (24) and sealing the opening (34) in cooperation with the cover (28). The frame (26) is formed with a diaphragm (42) above the wiper shaft (24) that is deflectable to facilitate assembly and allow the sensor to compensate for pressure changes in a fluid tank in which the sensor can be disposed.

## Description

### TECHNICAL FIELD

The present invention relates generally to fluid level sensors and more particularly to level sensors for vehicle fuel tanks.

### BACKGROUND OF THE INVENTION

Most vehicle fuel tanks include a fuel level sensor for outputting a signal representative of the level of fuel in the tank. The signal can be used to drive a fuel gage, illuminate a warning light, etc.

One common fuel level mechanism includes a float on a wire arm that is supported in a wiper and bushing on a frame. The frame holds a ceramic card that includes a resistive strip for creating an electrical resistance when the strip touches a contact of the wiper. Another type of fuel level sensor uses the same basic concepts as the arrangement discussed above, with the difference being that a float is constrained to vertical movement against a vertically oriented conductive strip and resistor element.

### SUMMARY OF THE INVENTION

As understood herein, fuel level sensors are exposed to the fuels and because of this the durability of the assembly is limited to the resistance of the components to fuel corrosion. As also understood herein, it would be desirable to provide a sealed assembly which prevents fuel from contacting key components such as the ceramic card and the wiper contacts, while facilitating ease of assembly, minimizing size, and using relatively low cost materials.

Accordingly, a fluid level sensor includes a wiper support with metal wiper contacts, a rotatable shaft holding the wiper support, and a seal assembly in which the wiper support is disposed, with the seal assembly including a frame and a cover. The frame and the cover are sealed together along respective frame and cover peripheries. The wiper support is sandwiched between the frame and cover and the shaft extends into and through an opening formed in the cover and is rotatable therein. A holder covers an end of the shaft and seals the opening in cooperation with the cover. The frame is formed with a diaphragm above the wiper shaft. The diaphragm is deflectable to facilitate assembly and allow the sensor to compensate for pressure changes in a fluid tank in which the sensor can be disposed.

In some embodiments the diaphragm is established by a relatively thinner portion of a wall of the frame and is surrounded by relatively thicker wall portions of the frame. A bushing/seal can closely surround the shaft in the opening. The end of the shaft can be formed with keying structure that is received in a complementarily-shaped depression of the holder to key the end of the shaft to the holder so that as the holder rotates, the shaft with wiper support rotates. The keying structure may include opposed flat portions formed on the shaft.

The bushing/seal and holder cooperate with the cover to prevent fluid from leaking through the opening. A ceramic card typically may be affixed within the seal assembly in juxtaposition with the wiper contacts such that as the shaft with wiper support rotates, the wiper contacts move over the ceramic card to generate a signal representative of fluid level.

In another aspect, a method of assembling a fuel level sensor includes inserting a bushing/seal into an opening of a cover, affixing a circuit card to the cover, and inserting a wiper shaft through the bushing/seal. The wiper shaft is coupled to at least one wiper contact closely juxtaposed with the circuit card. The method includes enclosing the circuit card and wiper contact by sealably engaging a frame with the cover, and engaging a holder with the shaft such that as the shaft rotates, the wiper contact moves over the card to generate a signal representative of fluid level. The bushing/seal and holder cooperate with the cover to prevent fluid from leaking through the opening.

In another aspect, an assembly includes seal assembly sealably holding a rotatable shaft coupled to a wiper support supporting at least one wiper contact, such that as the shaft rotates the contact revolves past a circuit element closely juxtaposed in the seal assembly with the contact. The circuit element is electrically connectable to a component to output a signal to the component. A diaphragm is formed in a first surface of the seal assembly above the shaft to deflect under pressure and an opening is formed through a second surface of the seal assembly opposed to the first surface. The shaft extends through the hole and is couplable to structure that can cause the shaft to rotate with a change of fluid level. The opening is sealed.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a schematic diagram of an intended example environment of the wiper assembly;

Figure 2 is a perspective view of an example wiper assembly; and

Figure 3 is an exploded perspective view of the assembly shown in Figure 2.

### DETAILED DESCRIPTION OF THE PREFERRED EMBODIMENT

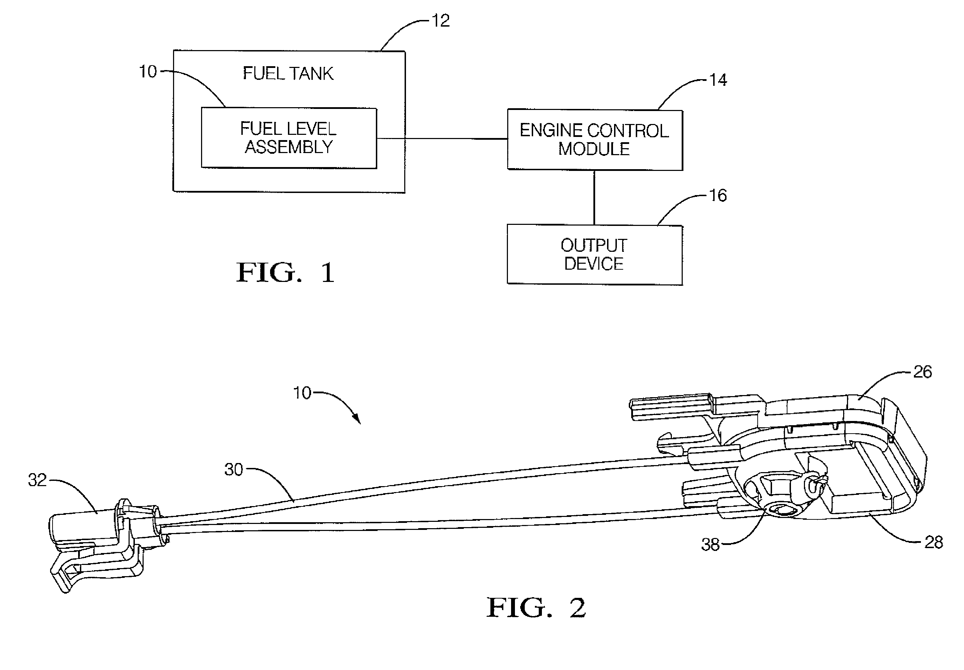

Referring initially to Figure 1, a fuel level assembly 10 in accordance with present principles may be disposed in a faille tank 12 to output a signal representing fuel level in the tank to a computer such as an engine control module (ECM) 14. In turn, the ECM 14 can use the information from the assembly 10 to output fuel information on an output device 16 such as but not limited to a gage, warning lamp, etc. The ECM 14 may use the information from the assembly 10 for other functions as well.

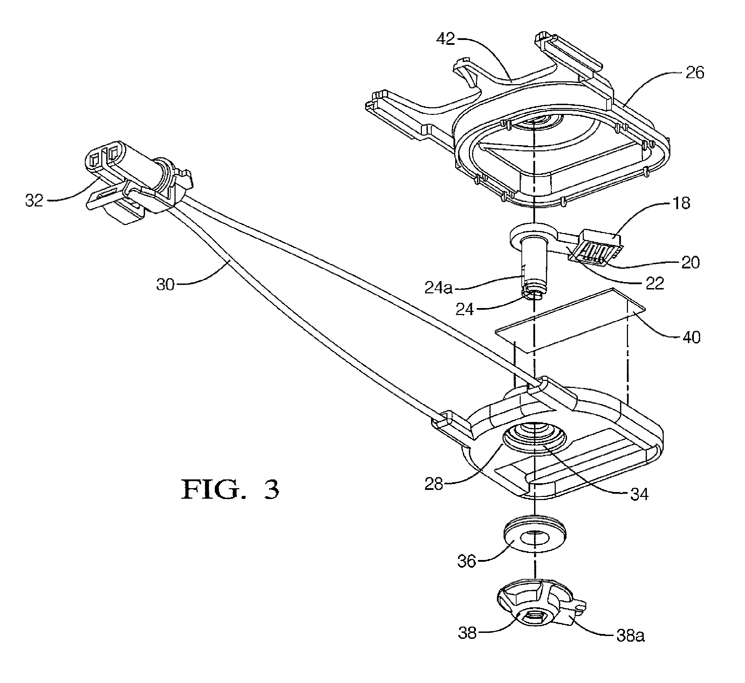

Figures 2 and 3 show details of the assembly 10. A generally parallelepiped-shaped plastic wiper support 18 with metal wiper contacts 20 is supported by an arm 22 on a generally cylindrical shaft 24. The wiper support 18, arm 22, and shaft 24 may be made of a unitary piece of molded plastic.

The wiper support 18, arm 22, and shaft 24 preferably are disposed in seal assembly which includes a flat frame 26 (except for a raised periphery as shown) and a flat cover 28 (with a raised periphery as shown), with the wiper support 18, arm 22, and shaft 24 being sandwiched between the cover 28 and frame 26 in the space created between the cover 26 and frame 28 when the respective raised peripheries are flush against each other. One or more elongated arms 30 are attached to the cover 28 and may terminate at a mount 32.

As shown best in Figure 3, the shaft 24 extends into and through an opening 34 formed in the cover 28, with a rubber or plastic bushing/seal 36 closely surrounding the shaft 24. The shaft 24 (and, hence, the wiper support 18 with contacts 20) can rotate while supported in the opening 34 by the bushing/seal 36.

The end of the shaft 24 has opposed flat portions 24a or other keying structure that is received in a complementarily-shaped depression of a holder 38 as shown, to completely cover and encase the end of the shaft 24 and to seal the internal components. The keying structure serves to key the end of the shaft 24 to the holder 38 so that as the holder 38 rotates, the shaft 24 with wiper support 18 likewise rotates. In any case, the bushing/seal 36 and holder 38 cooperate with the cover 28 to prevent fluid from leaking through the opening 34.

A ceramic card 40 is affixed to the surface of the cover 28 that faces the frame 26, in juxtaposition with the wiper support 18. It may now be appreciated that as the shaft 24 with wiper support 18 rotates, the wiper contacts 20 move relative to the ceramic card 40 and more particularly may ride against a resistor or other component as appropriate to generate a changing signal thereby representative of fuel level when, for instance, a float is coupled to a float arm fitting 38a of the holder 38.

To assemble the assembly 10, the bushing/seal 36 is inserted into the opening 34 of the cover 28. Then, the ceramic card 40 may be welded to output terminals which are overmolded in the cover 28 and that in turn are electrically connected to the ECM 14 shown in Figure 1. The wiper shaft 24 is then inserted through the bushing/seal 36 and held thereby in rotational motion with the opening 34. The cover 28 and frame 26 are welded or otherwise sealably fastened together along their peripheries (by, e.g., hot plate ultrasonic weld) and the holder 38 is then engaged with the end of the shaft 24 to complete the assembly.

Figure 3 also shows that the frame 26 includes a deflectable generally circular diaphragm 42 located directly above the wiper shaft 24. In one implementation the diaphragm 42 is established by a relatively thinner portion of the wall of the frame 26 and is surrounded by relatively thicker wall portions of the frame 26. The diaphragm 42 allows deflection to facilitate assembly of the wiper and holder and also allows the final assembly to "breathe" and compensate for pressure changes in the fuel tank to limit the fuel intrusion.

While the particular WIPER ASSEMBLY FOR FUEL LEVEL INDICATION is herein shown and described in detail, it is to be understood that the subject matter which is encompassed by the present invention is limited only by the claims.

## Claims

1. Fluid level sensor comprising:
a wiper support (18) with metal wiper contacts (20);
a rotatable shaft (24) holding the wiper support (18);
a seal assembly in which the wiper support (18) is disposed, the seal assembly including a frame (26) and a cover (28), the frame (26) and the cover (28) being sealed together along respective frame (26) and cover (28) peripheries, the wiper support (18) being sandwiched therebetween;
wherein the shaft (24) extends into and through an opening (34) formed in the cover (28) and is rotatable therein;
a holder (38) covering an end of the shaft (24) and sealing the opening (34) in cooperation with the cover (28);
the frame (26) being formed with a diaphragm (42) above the wiper shaft (24), the diaphragm (42) being deflectable to facilitate assembly and allow the sensor to compensate for pressure changes in a fluid tank in which the sensor can be disposed.

2. The sensor of Claim 1, wherein the diaphragm (42) is established by a relatively thinner portion of a wall of the frame (26) and is surrounded by relatively thicker wall portions of the frame (26).

3. The sensor of Claim 1 or Claim 2, comprising a bushing/seal (36) closely surrounding the shaft (24) in the opening (34).

4. The sensor of any one of Claims 1 to 3, wherein an end of the shaft (24) is formed with keying structure that is received in a complementarily-shaped depression of the holder (38) to key the end of the shaft (24) to the holder (38) so that as the holder (38) rotates, the shaft (24) with wiper support (18) rotates.

5. The sensor of Claim 4, wherein the keying structure includes opposed flat portions (24a) formed on the shaft (24).

6. The sensor of Claim 4 or Claim 5, wherein the bushing/seal (36) and holder (38) cooperate with the cover (28) to prevent fluid from leaking through the opening (34).

7. The sensor of any one of Claims 1 to 6, comprising a ceramic card (40) affixed within the seal assembly in juxtaposition with the wiper contacts (20) such that as the shaft (24) with wiper support (18) rotates, the wiper contacts (20) move over the ceramic card (40) to generate a signal representative of fluid level.

8. The sensor of any one of Claims 1 to 6, further comprising a circuit element closely juxtaposed in the seal assembly with the contact (20), the circuit element being electrically connectable to a component to output a signal to the component wherein the circuit element is on a ceramic card (40) affixed within the seal assembly in juxtaposition with the wiper contact (20).

9. A method of assembling a fuel level sensor as claimed in Claim 1 comprising:
inserting a bushing/seal (36) into an opening (34) of a cover (28);
affixing a circuit card (40) to the cover (28);
inserting a wiper shaft (24) through the bushing/seal (36), the wiper shaft (24) being coupled to at least one wiper contact (20) closely juxtaposed with the circuit card (40);
enclosing the circuit card (40) and wiper contact (20) by sealably engaging a frame (26) with the cover (28); and
engaging a holder (38) with the shaft (24) such that as the shaft (24) rotates, the wiper contact (20) moves over the card (40) to generate a signal representative of fluid level, wherein the bushing/seal (36) and holder (38) cooperate with the cover (28) to prevent fluid from leaking through the opening (34).
